# EUROPÄISCHE PATENTSCHRIFT

(11) **EP 2 469 300 B1**
(45) Veröffentlichungstag und Bekanntmachung des Hinweises auf die Patenterteilung: **22.08.2012**
(21) Anmeldenummer: 11162817.8
(22) Anmeldetag: 18.04.2011
(51) Int. Cl.: G01S 17/02, G01B 11/25, F16P 3/14, G01N 21/88, G02B 3/08, G02B 5/09, G03B 15/03, G03B 35/08

(54) **3D-Kamera und Verfahren zur dreidimensionalen Überwachung eines Überwachungsbereichs**
3D camera and method for three dimensional surveillance of a surveillance area
Caméra 3D et procédé de surveillance tridimensionnel d'un domaine de surveillance

(43) Veröffentlichungstag der Anmeldung: 27.06.2012
(73) Patentinhaber: SICK AG, 79183 Waldkirch (DE)
(72) Erfinder: Schneider, Dr. Florian, 79276 Reute (DE)
(74) Vertreter: Ludewigt, Christoph

(56) Entgegenhaltungen:
- EP-A1- 1 988 389
- EP-A1- 2 133 619
- EP-A1- 2 166 304
- EP-A1- 2 166 305
- DE-A1-102009 008 997
- US-A1- 2010 118 123

## Beschreibung

Die Erfindung betrifft eine 3D-Kamera mit mindestens einer Beleuchtungseinheit und ein Verfahren zur dreidimensionalen Überwachung eines Überwachungsbereichs nach dem Oberbegriff von Anspruch 1 beziehungsweise 14.

Im Gegensatz zu einer herkömmlichen Kamera nimmt eine 3D-Kamera auch eine Tiefeninformation auf und erzeugt somit dreidimensionale Bilddaten, die auch als Entfernungsbild oder Tiefenkarte bezeichnet werden. Die zusätzliche Entfernungsdimension lässt sich in einer Vielzahl von Anwendungen nutzen, um mehr Informationen über Objekte in der von der Kamera erfassten Szenerie zu gewinnen.

Ein Beispiel dafür ist die Sicherheitstechnik. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt. Dies kann je nach Situation die Abschaltung der Maschine oder das Verbringen in eine sichere Position sein. Mit der zusätzlichen Tiefeninformation lassen sich dreidimensionale Schutzbereiche definieren, die genauer an die Gefahrensituation anpassbar sind als zweidimensionale Schutzfelder, und es kann auch besser beurteilt werden, ob sich eine Person in kritischer Weise an die Gefahrenquelle annähert.

In einer weiteren Anwendung werden erfasste Bewegungen als Befehl an eine mit der 3D-Kamera verbundene Steuerung interpretiert. Dazu werden beispielsweise Gesten erfasst. Obwohl dies in erster Linie aus der Unterhaltungselektronik bekannt ist, kann es auch genutzt werden, um einen Sensor in der Sicherheitstechnik zu bedienen oder zu konfigurieren, wie etwa in der DE 10 2010 017 857 beschrieben.

Ein bekanntes Prinzip zur Erfassung dreidimensionaler Bilddaten beruht auf Triangulation unter Zuhilfenahme einer aktiven Musterbeleuchtung. Bei stereoskopischen Systemen werden dann jeweils mindestens zwei Aufnahmen aus unterschiedlicher Perspektive erzeugt. In den überlappenden Bildbereichen werden gleiche Strukturen identifiziert und aus der Disparität und den optischen Parametern des Kamerasystems mittels Triangulation Entfernungen und somit das dreidimensionale Bild beziehungsweise die Tiefenkarte berechnet.

Eine Stereokamera ist prinzipiell auch in der Lage, passiv zu arbeiten, d.h. ohne eine eigene Musterbeleuchtung. Für eine zuverlässige Bildauswertung, ganz besonders im Rahmen der Sicherheitstechnik, besteht aber der Anspruch, die dreidimensionalen Bilddaten in Form einer dichten Tiefenkarte zu erzeugen, also einen zuverlässigen Abstandswert für jeden auszuwertenden Bildbereich und bevorzugt nahezu jeden Bildpunkt verfügbar zu haben. Ist die zu überwachende Szenerie kontrastschwach oder weist Bereiche mit wenig Struktur auf, so wird dies mit einem passiven Sensor nicht erreicht. Große strukturlose Flächen oder zueinander ähnliche Strukturmerkmale können eine eindeutige Zuordnung von Bildbereichen beim Auffinden der Korrespondenzen zwischen den Strukturelementen der Bilder verhindern. Die Folge sind Lücken in den dreidimensionalen Bildern oder fehlerhafte Berechnungen der Entfernungen.

Andere Triangulationssysteme verwenden nur eine Kamera und werten die Veränderungen des projizierten Musters durch Objekte in verschiedenen Entfernungen aus. Dazu wird dem System das Beleuchtungsmuster eingelernt und so eine Erwartungshaltung für die Bilddaten bei verschiedenen Objektentfernungen und -strukturen generiert. Eine Möglichkeit besteht darin, das Beleuchtungsmuster auf Objekten, insbesondere einer Fläche, in verschiedenen Entfernungen als Referenzbild einzulernen. In einem derartigen System ist eine aktive Beleuchtung von vorne herein unverzichtbar.

Aus der EP 2 166 304 A1 ist eine Beleuchtungseinheit für eine stereoskopische Sicherheitskamera bekannt. Dabei wird ein selbstunähnliches Beleuchtungsmuster mit Hilfe eines optischen Phasenelements erzeugt, das von einer divergenten Laserlichtquelle durchstrahlt wird. Mit einem solchen Phasenelement sind die notwendigen Intensitäten des Beleuchtungsmusters in einer gewünschten Reichweite nicht zu erzielen.

In der US 2007/0263903 A1 erzeugt ein stereoskopisches Kamerasystem mittels einer Beleuchtungseinheit ein strukturiertes Beleuchtungsmuster, welches dann verwendet wird, um Entfernungen zu berechnen. Dabei entsteht das Muster, indem ein diffraktives optisches Element mit einem Laser oder einer LED beleuchtet wird. Problematisch bei der Verwendung eines diffraktiven optischen Elements ist, dass ein relativ großer Lichtanteil in nullter Beugungsordnung transmittiert wird. Aus Gründen der Augensicherheit kann deshalb diese Beleuchtungseinheit nicht mit den erforderlichen Lichtstärken betrieben werden.

In der WO 2009/093228 A2 wird deshalb in einer ähnlichen Anordnung ein zweites diffraktives optisches Element nachgeordnet. Der Lichtstrahl nullter Beugungsordnung wird auf diese Weise nochmals verteilt.

Die Verwendung von Beleuchtungseinheiten auf Basis diffraktiver optischer Elemente hat aber den weiteren Nachteil, dass die dafür als Leuchtmittel erforderlichen Singlemode-Laserdioden mit sehr kleiner Emitterfläche nur mit relativ geringer Ausgangsleistung deutlich unterhalb einem Watt verfügbar sind und nur eine begrenzte Lebensdauer haben. Dies wirkt sich nachteilig auf den Sichtbereich oder Bildfeldwinkel, die Reichweite, die Belichtungszeit und die Detektionsfähigkeit beziehungsweise Verfügbarkeit aus. Damit sind derartige Beleuchtungseinheiten gerade zur Beleuchtung größerer Bereiche in größeren Entfernungen, wie sie bei Anwendungen in der Sicherheitstechnik erforderlich sind, nur eingeschränkt verwendbar.

In einem anderen bekannten Ansatz zur Erzeugung von Beleuchtungsmustern in einer gattungsgemäßen 3D-Kamera, der beispielsweise in der US 2008/0240502 A1 beschrieben wird, erzeugt ein Dia ein Punktmuster. Gemäß US 2010/0118123 A1 weist dieses Dia eine Vielzahl unregelmäßig angeordneter Mikrolinsen auf.

Die Verwendung eines Projektionsverfahrens mit einem Dia beziehungsweise einem Dia mit Mikrolinsen ist aber energetisch und damit ökonomisch nur begrenzt effizient. Bei der Verwendung eines herkömmlichen Dias werden die dunklen Bereiche des Beleuchtungsmusters hart abgeschattet und nicht energieeffizient umverteilt, so dass das abgeschattete Licht nur zur Erwärmung und nicht zur Ausleuchtung des Überwachungsbereichs beträgt. Je geringer der Füllgrad des Musters ist, also das Verhältnis von Transmissions- zu Gesamtfläche des Dias, desto geringer auch der Wirkungsgrad. Das wirkt sich deshalb besonders nachteilig aus, weil bereits ein Füllgrad von beispielsweise 10-20% für die Erfassung dichter Tiefenkarten ausreicht. Damit bleiben 80-90% der Ausgangsleistung ungenutzt. Dies ist nicht nur energetisch ineffizient, sondern treibt auch die Herstellungskosten in die Höhe, weil der Preis von Laserdioden in etwa linear mit der optischen Ausgangsleistung skaliert.

Der Einsatz von Dias mit Mikrolinsen erhöht aufgrund der Umverteilung des Lichts die Effizienz im Vergleich zu einem herkömmlichen Dia. Aufgrund der angestrebten Struktur des Beleuchtungsmusters und damit der Verteilung der Mikrolinsen gibt es aber auch hier ungenutzte Teilbereiche, und eine gute Effizienz lässt sich daher nur bis zu einem gewissen Grad erreichen.

Ohne Zusammenhang mit 3D-Sensoren sind, beispielsweise von Insektenaugen oder als Spielzeug, Facettenlinsen bekannt. Als Partydekoration oder in Diskotheken werden weiterhin fragmentierte Spiegelkugeln verwendet, um den Raum mit Lichtstrahlen zu füllen. Derartige optische Elemente sind aber für den Einsatz in einer zuverlässigen 3D-Kamera weder gedacht noch geeignet.

Aus der DE 10 2009 008 997 A1 ist eine Vorrichtung zur Lenkung von Lichtstrahlen bekannt, bei der eine Vielzahl von transparenten Tröpfchen auf einem ebenfalls transparenten Substrat angebracht werden. Die Tröpfchen können eingefärbt werden, um ein erkennbares Gesamtmotiv darzustellen, etwa auf einer Fensterscheibe. In einer anderen Ausführungsform bilden die Tröpfchen zusammen eine gemeinsame lichtlenkende Struktur in Form ein Prismas, einer Linse oder einer Fresnelstruktur.

Es ist daher Aufgabe der Erfindung, die Erzeugung eines Beleuchtungsmusters für eine 3D-Kamera zu verbessern.

Diese Aufgabe wird durch eine 3D-Kamera mit mindestens einer Beleuchtungseinheit und ein Verfahren zur dreidimensionalen Überwachung eines Überwachungsbereichs nach Anspruch 1 beziehungsweise 11 gelöst. Dabei geht die Erfindung von dem Grundgedanken aus, ein Beleuchtungsmuster durch reine Umverteilung des eingestrahlten Lichts zu erzeugen. Dazu wird als Mustererzeugungselement ein refraktives oder reflektives Element eingesetzt. Durch eine Vielzahl von Facetten wird der Lichtstrahl der Lichtquelle in eine Vielzahl von Einzellichtstrahlen aufgespaltet, und jeder dieser Einzelstrahlen erzeugt ein Element des Beleuchtungsmusters.

Die Erfindung hat den Vorteil, dass Beleuchtungsmuster mit besonders hoher optischer Ausgangsleistung bei hoher Effizienz erzeugt werden können. Das für die jeweilige Anwendung geeignete Beleuchtungsmuster ist dabei durch Veränderungen der Facettenstruktur anpassbar. Damit wird der Einsatzbereich von 3D-Kameras, insbesondere von kamerabasierten Triangulationssensoren erweitert. Sichtbereich, Bildfeldwinkel, Reichweite, Detektionsfähigkeit und Verfügbarkeit werden erhöht und die Beleuchtungszeit verringert.

Das Beleuchtungsmuster ist bevorzugt ein Punktmuster, dessen Punkte von jeweils einem Einzellichtstrahl erzeugt sind. Jede Facette erzeugt also ein zusammenhängendes Teillichtbündel als Einzellichtstrahl, das beim Auftreffen auf ein Objekt einen Beleuchtungspunkt bildet. Zwischen den Beleuchtungspunkten wird der Überwachungsbereich demnach nicht aktiv ausgeleuchtet und bildet dunkle Bereiche. Punktförmig bedeutet in diesem Zusammenhang nicht notwendig einen kreisförmigen Querschnitt des Einzellichtstrahls. Die Facetten können auch andere Geometrien aufweisen, was dann zu entsprechend geformten Punkten in dem Beleuchtungsmuster führt.

Das Mustererzeugungselement ist bevorzugt ein Facettenspiegel oder eine Facettenlinse. Das Muster wird dementsprechend reflektiv oder transmissiv-refraktiv erzeugt. Sowohl ein Facettenspiegel als auch eine Facettenlinse lassen sich, wenn die erforderliche Kontur einmal feststeht, sehr kostengünstig als Kunststoffteil herstellen, beispielsweise in einem Spritzgussverfahren.

Das Mustererzeugungselement weist als Ganzes bevorzugt die Gestalt einer Streulinse oder eines Wölbspiegels auf. Damit ist gemeint, dass die äußere Kontur des Mustererzeugungselements die entsprechende Form hat, die von den Facetten überlagert ist und so feinstrukturiert wird. Durch diese Gestalt werden die Einzellichtstrahlen aufgefächert, um einen großen Überwachungsbereich auszuleuchten.

Die Facetten in einem äußeren Bereich des Mustererzeugungselements weisen bevorzugt eine größere Fläche auf als in einem inneren Bereich des Mustererzeugungselements. Damit kann ein energetischer Randabfall der Beleuchtung beziehungsweise des Bildsensors ausgeglichen werden, so dass homogen ausgeleuchtete Bilder aufgenommen werden.

Die Facetten sind bevorzugt ungleichmäßig. Das bedeutet insbesondere untereinander unterschiedliche Größen und/oder Formen. Die Einzellichtstrahlen erzeugen dementsprechend unterschiedliche Musterelemente. Ein unregelmäßiges oder sogar zumindest lokal selbstunähnliches, also nicht durch Translationen ineinander überführbares Beleuchtungsmuster ist vorteilhaft für ein Stereoskopieverfahren, weil sonst die Gefahr von Scheinkorrespondenzen durch übereinstimmende Musterbereiche besteht.

Die Facetten sind bevorzugt untereinander um unterschiedliche Winkel verkippt. Das ist ein weiteres Mittel, um unregelmäßige Musterstrukturen zu erhalten. Die optischen Achsen der Facetten beziehungsweise die Normalenvektoren auf die Facettenflächen sind dabei zueinander unregelmäßig verkippt. Das führt in dem Überwachungsbereich zu unterschiedlichen Abständen der einzelnen Musterelemente untereinander.

Die Beleuchtungseinheit weist bevorzugt ein Abbildungsobjektiv auf, um das Beleuchtungsmuster aus dem Nahfeld hinter dem Mustererzeugungselement in den Überwachungsbereich abzubilden. Als Abbildungsobjektiv genügt im einfachsten Fall eine einzige Linse. Die Facetten müssen so den jeweiligen Einzellichtstrahl nicht im Fernfeld des Überwachungsbereichs erzeugen, sondern das Muster wird schon kurz hinter dem Mustererzeugungselement abgegriffen und in den Überwachungsbereich projiziert. Alternativ zu einer solchen Abbildung ist auch denkbar, dass die einzelnen Musterelemente von dem Mustererzeugungselement direkt, ohne weitere nachgeordnete optische Elemente in dem Überwachungsbereich erzeugt werden.

Das Mustererzeugungselement ist bevorzugt verschieblich oder drehbar gelagert, um unterschiedliche Facetten in den Lichtstrahl zu bewegen. Darunter ist ein drehbares Mustererzeugungselement besonders bevorzugt, weil es weniger Bauraum beansprucht und insgesamt leichter herzustellen und zu bewegen ist. Aufgrund der Bewegung werden jeweils unterschiedliche Teilbereiche der Facettenstruktur ausgeleuchtet. Dies ermöglicht, auf dem Mustererzeugungselement an verschiedenen Positionen unterschiedliche Facettenanordnungen unterzubringen, die jeweils ein entsprechend geändertes Beleuchtungsmuster generieren. Damit kann das Beleuchtungsmuster adaptiv an die Gegebenheiten der Szenerie angepasst werden. Der natürliche Szenenkontrast wird dadurch noch besser ausgenutzt. Denkbar ist beispielsweise auch, mehrere 3D-Bilder in unterschiedlichen Bewegungsstadien aufzunehmen, um so durch komplementäre Aufnahmen Lücken in der Tiefenkarte zu schließen.

Die Lichtquelle weist bevorzugt mindestens einen Laser auf, wobei insbesondere zwischen dem Laser und dem Mustererzeugungselement eine Sammeloptik vorgesehen ist, um das Laserlicht auf das Mustererzeugungselement zu bündeln. Der Laser darf dabei eine größere Emitterfläche oder sogar mehrere Emitterflächen aufweisen, weil das reflektive oder refraktive Mustererzeugungselement nicht auf die Kohärenz angewiesen ist. Durch die Kollimierung wird die gesamte Ausgangsleistung des Lasers auf das Mustererzeugungselement oder einen gewünschten Teilbereich davon gebündelt. Die 3D-Kamera weist bevorzugt eine Vielzahl von Beleuchtungseinheiten zur Ausleuchtung eines größeren Überwachungsbereichs oder zur Erzeugung einer größeren Beleuchtungsintensität auf, wobei die Beleuchtungseinheiten derart angeordnet sind, dass sich die Beleuchtungsbereiche der einzelnen Beleuchtungseinheiten überlappend oder nichtüberlappend addieren. Um eine größere Beleuchtungsintensität zu erzielen, werden die Beleuchtungsfelder der Beleuchtungseinheiten überlappend ausgebildet. Dadurch genügen von jeder einzelnen Beleuchtungseinheit weniger Musterelemente mit einer dafür höheren optischen Leistung. Alternativ werden die Beleuchtungsfelder nicht überlappend ausgebildet, um kachelartig ein größeres Beleuchtungsmuster zu bilden. Beide Effekte können durch Überlappen kombiniert werden, insbesondere durch teilweise Überlappung. Außerdem ist denkbar, dass dasselbe Mustererzeugungselement von mehreren Lichtquellen angestrahlt wird. Es ist also nicht zwingend notwendig, dass mit jeder zusätzlichen Lichtquelle auch ein zusätzliches Mustererzeugungselement eingesetzt wird.

Die 3D-Kamera ist bevorzugt als Stereokamera ausgebildet und weist eine Auswertungseinheit auf, welche für die Anwendung eines Stereoalgorithmus ausgebildet ist, in dem zur Erzeugung eines dreidimensionalen Entfernungsbildes einander zugehörige Teilbereiche der von den beiden Kameras der Stereokamera aufgenommenen Bilder des von dem Beleuchtungsmuster ausgeleuchteten Überwachungsbereichs erkannt und deren Entfernung anhand der Disparität berechnet wird. Der erfindungsgemäß erhöhte Kontrast in der Szenerie hilft dabei, auch bei einer ungünstigen Szenerie dichte Tiefenkarten zu erfassen.

Die 3D-Kamera ist bevorzugt als Sicherheitskamera ausgebildet, wobei die Auswertungseinheit unzulässige Eingriffe in den Überwachungsbereich erkennen und daraufhin ein Abschaltsignal erzeugen kann, und wobei ein Sicherheitsausgang vorgesehen ist, um darüber ein Abschaltsignal an eine überwachte Maschine auszugeben. Gerade für sicherheitstechnische Anwendungen ist eine zuverlässige Erfassung einer dichten Tiefenkarte erforderlich. Dadurch wird die erforderliche sichere Objektdetektion ermöglicht.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Gesamtdarstellung einer Ausführungsform einer erfindungsgemäßen 3D-Kamera mit dem von deren Beleuchtungseinheit ausgeleuchteten Überwachungsbereich;
- Fig. 2: eine schematische Darstellung einer Ausführungsform der erfindungsgemäßen Beleuchtungseinheit mit einer Facettenlinse;
- Fig. 3: eine Ansicht einer Ausführungsform einer Facettenlinse;
- Fig. 4: eine schematische Darstellung einer weiteren Ausführungsform der erfindungsgemäßen Beleuchtungseinheit mit einem Facettenspiegel;
- Fig. 5: eine schematische Darstellung einer weiteren Ausführungsform der erfindungsgemäßen Beleuchtungseinheit mit einer Facettenlinse und einem nachgeordneten Abbildungsobjektiv; und
- Fig. 6: eine Darstellung einer Anordnung mehrerer erfindungsgemäßer Beleuchtungseinheiten.

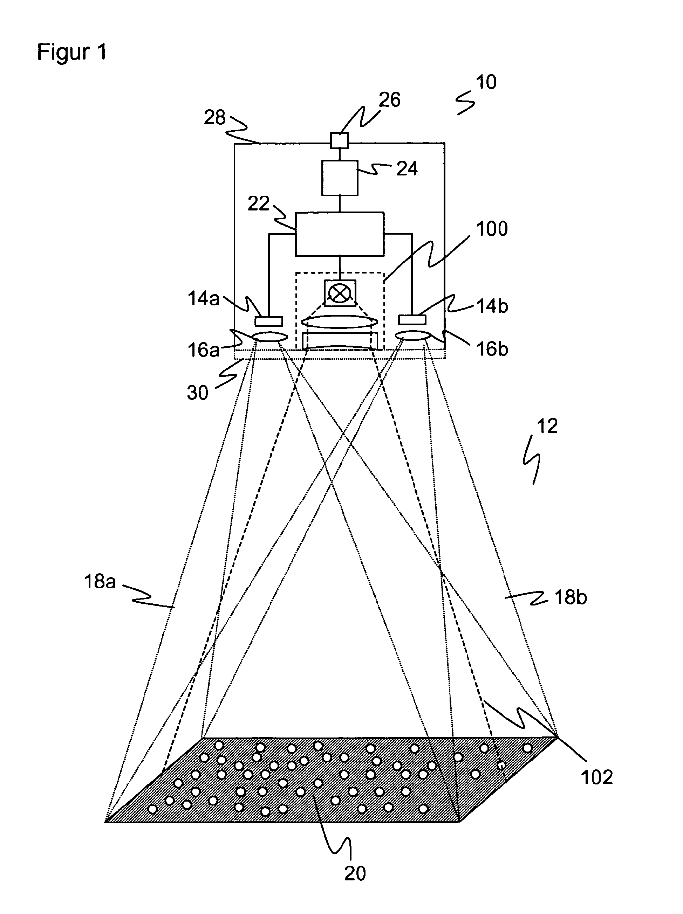

Figur 1 zeigt in einer schematischen dreidimensionalen Darstellung den allgemeinen Aufbau einer erfindungsgemäßen 3D-Kamera 10 nach dem Stereoskopieprinzip, die zur Überwachung eines Raum- oder Überwachungsbereichs 12 eingesetzt ist. Die Erfindung wird an diesem Beispiel einer stereoskopischen 3D-Kamera beschrieben, umfasst aber auch andere triangulationsbasierte 3D-Kameras, etwa mit nur einem Bildsensor und Auswertung der entfernungsabhängigen Veränderungen eines Beleuchtungsmusters, wie sie beispielhaft in der Einleitung genannt sind. Mit Überwachung sind im speziellen sicherheitstechnische Anwendungen gemeint. Das kann die Absicherung einer gefährlichen Maschine sein, indem dreidimensionale Schutzbereiche in dem Überwachungsbereich 12 definiert werden, die von der 3D-Kamera auf unzulässige Eingriffe überwacht werden. Mit der 3D-Kamera sind aber auch andere Anwendungen denkbar, beispielsweise das Erfassen von bestimmten Bewegungen, die als Befehl an die 3D-Kamera 10 oder an ein daran angeschlossenes System interpretiert werden.

In der 3D-Kamera 10 sind zwei Kameramodule in einem bekannten festen Abstand zueinander montiert und nehmen jeweils Bilder des Überwachungsbereichs 12 auf. In jeder Kamera ist ein Bildsensor 14a, 14b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 14a, 14b ist jeweils ein Objektiv mit einer abbildenden Optik zugeordnet, welches als Linse 16a, 16b dargestellt ist und in der Praxis als jede bekannte Abbildungsoptik realisiert sein kann. Der Sichtwinkel dieser Optiken ist in Figur 1 durch gestrichelte Linien dargestellt, die jeweils eine Sichtpyramide 18a, 18b bilden.

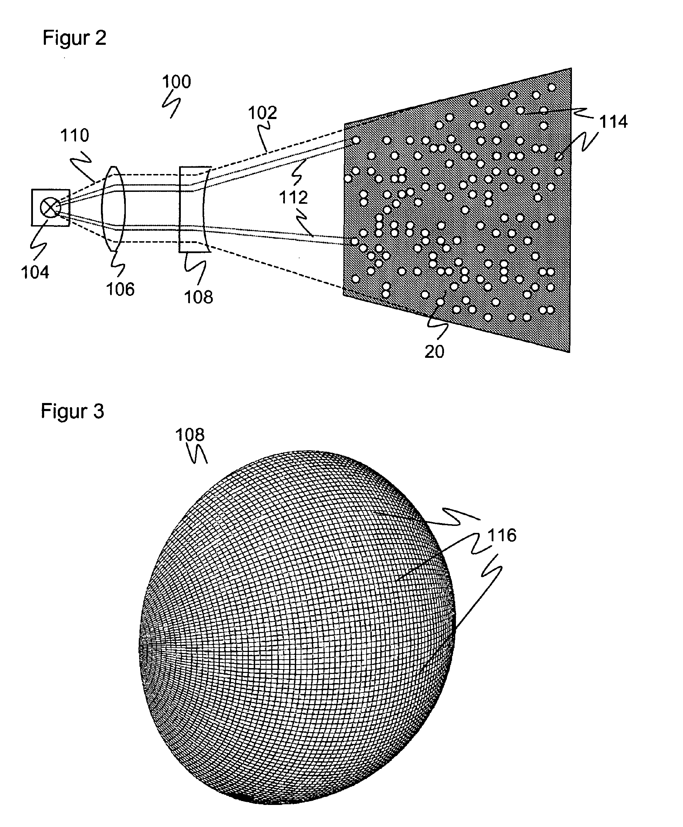

In der Mitte zwischen den beiden Bildsensoren 14a, 14b ist eine Beleuchtungseinheit 100 dargestellt, wobei diese räumliche Anordnung nur als Beispiel zu verstehen ist und die Beleuchtungseinheit ebenso asymmetrisch oder sogar außerhalb der 3D-Kamera 10 angeordnet sein kann. Die Beleuchtungseinheit 100 erzeugt in einem Beleuchtungsbereich 102 ein strukturiertes Beleuchtungsmuster 20 und wird weiter unten in verschiedenen Ausführungsformen im Zusammenhang mit den Figuren 2 bis 6 näher erläutert.

Mit den beiden Bildsensoren 14a, 14b und der Beleuchtungseinheit 100 ist eine Steuerung 22 verbunden. Mittels der Steuerung 22 wird das strukturierte Beleuchtungsmuster 20 erzeugt und bei Bedarf in seiner Struktur oder Intensität variiert, und die Steuerung 22 empfängt Bilddaten der Bildsensoren 14a, 14b. Aus diesen Bilddaten berechnet die Steuerung 22 mit Hilfe einer stereoskopischen Disparitätsschätzung dreidimensionale Bilddaten (Entfernungsbild, Tiefenkarte) des Überwachungsbereichs 12. Das strukturierte Beleuchtungsmuster 20 sorgt dabei für einen guten Kontrast und eine eindeutig zuordenbare Struktur jedes Bildelements in dem beleuchteten Überwachungsbereich 12.

Erkennt die Steuerung 22 einen unzulässigen Eingriff in einen Schutzbereich, so wird über eine Warn- oder Abschalteinrichtung 24, die wiederum in die Steuerung 22 integriert sein kann, eine Warnung ausgegeben oder die Gefahrenquelle abgesichert, beispielsweise ein Roboterarm oder eine sonstige Maschine gestoppt. Sicherheitsrelevante Signale, also vor allem das Abschaltsignal, werden über einen Sicherheitsausgang 26 ausgegeben (OSSD, Output Signal Switching Device). In nichtsicherheitstechnischen Anwendungen kann auf diese Funktionalität auch verzichtet werden. Ebenso ist denkbar, dass die dreidimensionalen Bilddaten lediglich als solche ausgegeben und weitere Auswertungen extern vorgenommen werden.

Um für sicherheitstechnische Anwendungen geeignet zu sein, ist die 3D-Kamera 10 fehlersicher ausgelegt. Dies bedeutet unter anderem, dass die 3D-Kamera 10 sich selber in Zyklen unterhalb der geforderten Ansprechzeit testen kann, insbesondere auch Defekte der Beleuchtungseinheit 100 erkennt und somit sicherstellt, dass das Beleuchtungsmuster 20 in einer erwarteten Mindestintensität verfügbar ist, und dass der Sicherheitsausgang 26 sowie die Warn- oder Abschalteinrichtung 24 sicher, beispielsweise zweikanalig ausgelegt sind. Ebenso ist auch die Steuerung 22 selbstsicher, wertet also zweikanalig aus oder verwendet Algorithmen, die sich selbst prüfen können. Derartige Vorschriften sind für allgemeine berührungslos wirkende Schutzeinrichtungen beispielsweise in der EN 61496-1 bzw. der EN 13849-1 normiert. Eine entsprechende Norm für Sicherheitskameras befindet sich in der Vorbereitung.

Die Sicherheitskamera 10 wird von einem Gehäuse 28 umgeben und geschützt. Durch eine Frontscheibe 30 kann Licht in und aus dem Überwachungsbereich 12 hindurchtreten. Die Frontscheibe 30 hat Filtereigenschaften, welche auf die Sendefrequenz der Beleuchtungseinheit 100 abgestimmt ist. Selbst mit lichtstarken Beleuchtungseinheiten 100 kann nämlich bei ungünstigen Bedingungen, wie sehr hellen Umgebungen, großen Überwachungsvolumina oder großen Abständen von 5 Metern und mehr, das Nutzsignal im Rauschen des Gesamtspektrums nicht hinreichend detektiert werden. Mit einer Beleuchtungseinheit 100, die nur Licht in einem oder mehreren schmalen sichtbaren, ultravioletten oder infraroten Bändern aussendet, und einem darauf abgestimmten Filter 30 kann das Signal/Rauschverhältnis ganz erheblich verbessert werden, weil Umgebungslicht außerhalb dieser Bänder keine Rolle mehr spielt. Der optische Filter 30 kann auch anders realisiert sein, etwa in den Objektiven der Kameramodule.

Figur 2 zeigt eine erste Ausführungsform der erfindungsgemäßen Beleuchtungseinheit 100. Wie in der gesamten Beschreibung bezeichnen gleiche Bezugszeichen die gleichen Merkmale. Einer Lichtquelle 104 ist eine Kollimationslinse 106 und ein refraktives Mustererzeugungselement nachgeordnet, das hier beispielhaft als Facettenlinse 108 ausgebildet ist. Die Lichtquelle 104 ist vorzugsweise eine Laserdiode. Da deren Kohärenzeigenschaften für die Beleuchtung nicht benötigt werden, muss die Laserdiode keine Singlemode-Laserdiode sein. Auch genügen wegen der hohen Lichtausbeute der Beleuchtungseinheit 100 vergleichsweise moderate Ausgangsleistungen, jedoch können besonders für größere Reichweiten auch die stärksten verfügbaren Hochleistungslaser eingesetzt werden.

Die Lichtquelle 104 erzeugt einen Lichtstrahl 110, der von der Kollimationslinse 106 gebündelt wird und dann auf die Facettenlinse 108 fällt. Dort wird der Lichtstrahl 110 aufgrund der Gesamtkontur der vorzugsweise als Streulinse ausgebildeten Facettenlinse 108 aufgestreut, um den Beleuchtungsbereich 102 auszufüllen. Die einzelnen Facetten teilen den Lichtstrahl 110 dabei in eine Vielzahl von Einzellichtstrahlen 112 auf. Jeder der Einzellichtstrahlen 112 erzeugt in dem Überwachungsbereich 12 beim Auftreffen auf ein Objekt einen Lichtpunkt 114. In ihrer Gesamtheit bilden die Lichtpunkte 114 das Beleuchtungsmuster 20. Dabei ist die Darstellung in den Figuren rein schematisch zu verstehen. In der Regel wird die tatsächliche Anzahl von Lichtpunkten 114 wesentlich höher sein und auch andere Füllgrade erzielen, wobei ein Füllgrad von etwa 10-20% häufig für eine zuverlässige Aufnahme einer dichten Tiefenkarte ausreicht.

Figur 3 zeigt die Facettenlinse 108 als Beispiel eines refraktiven Mustererzeugungselements in einer Detailansicht. Eine Vielzahl von Facetten 114 erzeugt aus dem parallelen Lichtstrahl 110 der Lichtquelle 104 jeweils einen Einzellichtstrahl 114 und daraus einen Lichtpunkt 116. Die Größe der Lichtpunkte 116 wird außer durch die Entfernung des Objekts, auf dem der Einzellichtstrahl 114 auftrifft, durch den Flächeninhalt der jeweiligen Facette 114 bestimmt. Ebenso entspricht der Querschnitt der Einzellichtstrahlen 114 und damit der Lichtpunkte 116 der Geometrie der jeweiligen Facette 114.

Durch entsprechende Gestaltung der Facetten 116 kann somit das Beleuchtungsmuster 20 angepasst werden. Die Facetten 116 haben vorzugsweise unterschiedliche Flächeninhalte und Konturen. Dadurch entsteht ein unregelmäßiges Beleuchtungsmuster 20, das die Erkennung von Scheinkorrespondenzen durch den Stereoalgorithmus verhindert. Ein weiterer Parameter zur Veränderung des Beleuchtungsmusters 20 ist die Orientierung der Facetten 116, die über den Normalenvektor auf die Facettenfläche definiert werden kann. Wenn diese Normalenvektoren in unregelmäßiger Weise zueinander verkippt werden, sind dementsprechend auch die Lichtpunkte 114 unregelmäßig verteilt.

Über die Anpassung der Facettenstrukturen können auch weitere Eigenschaften des Beleuchtungsmusters 20 angepasst werden. Beispielsweise führen größere Facetten 116 im äußeren Bereich dazu, dass ein Randabfall der Intensität ausgeglichen wird und damit besonders homogen ausgeleuchtete Bilder aufgenommen werden.

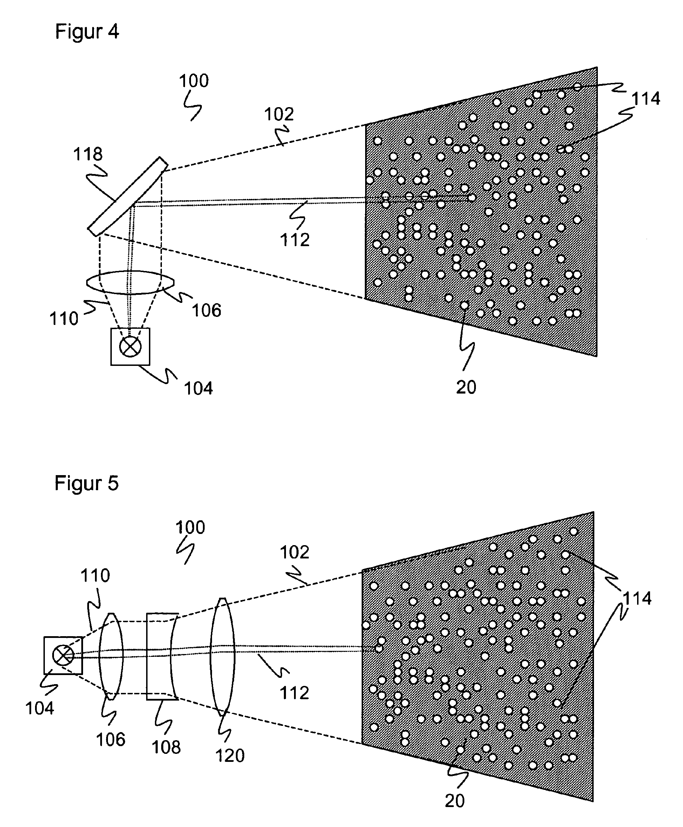

Figur 4 zeigt eine weitere Ausführungsform der Beleuchtungseinheit 100. Anstelle eines refraktiven Mustererzeugungselements wird dabei ein reflektives Mustererzeugungselement verwendet, das hier beispielhaft als Facettenspiegel 118 ausgestaltet ist. Die Anordnung von Lichtquelle 104 und Kollimationslinse 106 ist entsprechend angepasst. Der Facettenspiegel 118 ist vorzugsweise als Wölbspiegel ausgebildet, um insgesamt eine aufstreuende Wirkung zu erzielen und so den Beleuchtungsbereich 102 auszufüllen. Die Wirkung des Facettenspiegels 118 entspricht ansonsten der Facettenlinse 108, und auch die weiterbildenden Eigenschaften der Facettenlinse 108 lassen sich entsprechend übertragen.

Figur 5 zeigt nochmals eine alternative Ausführungsform der Beleuchtungseinheit 100. Diese Ausführungsform unterscheidet sich von derjenigen gemäß Figur 3 durch ein der Facettenlinse 108 nachgeordnetes Abbildungsobjektiv 120, bei dem es sich im einfachsten Fall um eine einzige Linse handelt. Ein derartiges Abbildungsobjektiv 120 kann ganz analog auch in der Ausführungsform gemäß Figur 4 eingesetzt werden. Das Abbildungsobjektiv 120 projiziert das von der Facettenlinse 108 erzeugte Beleuchtungsmuster 20 in den Überwachungsbereich 12.

In einer nicht dargestellten weiteren Ausführungsform ist das Mustererzeugungselement beweglich angebracht. Vorzugsweise wird es dazu auf einer drehbaren Achse gelagert, aber andere Bewegungen wie eine Verschiebung sind möglich. Auf dem Mustererzeugungselement befinden sich Facettenstrukturen mit unterschiedlichen Flächeninhalten, Geometrien und/oder Anordnungen, die nach Bedarf in den Strahlengang des Lichtstrahls 110 gefahren werden. So entstehen unterschiedliche Beleuchtungsmuster 20, und die Auswahl kann beispielsweise je nach Anwendung oder Szenerie getroffen werden, um das Beleuchtungsmuster 20 an die konkreten Anforderungen anzupassen.

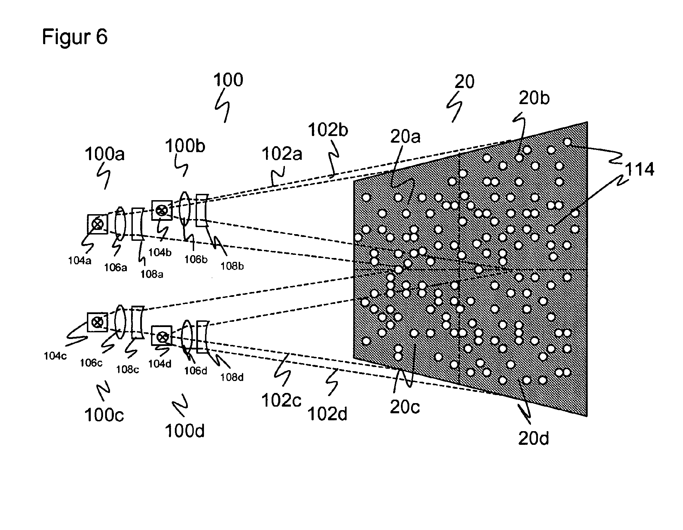

Figur 6 zeigt eine Mehrfachanordnung von Beleuchteinheiten 100a-d, die in ihrer Gesamtheit die Beleuchtungseinheit 100 bilden und ihre strukturierten Beleuchtungsmuster 20a-d zu einem größeren Beleuchtungsmuster 20 addieren. Alternativ können die Beleuchtungseinheiten 100a-d auch so ausgerichtet werden, dass sich die Beleuchtungsmuster 20a-d zumindest teilweise überlappen. Auf diese Weise wird der Beleuchtungsbereich 102 vergrößert oder die Intensität des Beleuchtungsmusters 20 in dem Beleuchtungsbereich 102 erhöht.

Jede einzelne Beleuchtungseinheit 100a-d weist jeweils eine Lichtquelle 104a-d, eine Kollimationslinse 106a-d und eine Facettenlinse 108a-d auf. Da jedem Teilbereich 20a-d jeweils die Leistung einer eigenen Lichtquelle 104a-d zur Verfügung steht, ist die Gesamtenergie in dem Beleuchtungsmuster 20 gegenüber einer einzigen baugleichen Lichtquelle 104 erhöht. Somit können höhere Leistungen, also insbesondere höhere Reichweiten erzielt werden, oder man kommt mit kostengünstigeren und einfacheren Lichtquellen geringerer Ausgangsleistung aus. Schließlich vereinfacht die Verteilung der Lichtleistung auf mehrere Quellen etwaige Probleme mit der Einhaltung von Augenschutzbedingungen. Es ist denkbar, dass mehrere Beleuchtungseinheiten 100a-d sich abweichend von der Darstellung eine Lichtquelle 104a-d teilen, also dieselbe Facettenlinse 108 mehrfach an unterschiedlichen Orten von einem Lichtstrahl 110 durchstrahlt wird. Die Mehrfachanordnung kann ganz analog aus Beleuchtungseinheiten 100a-d gemäß einer der Figuren 4 oder 5 gebildet werden.

## Patentansprüche

1. 3D-Kamera (10) mit mindestens einem Bildsensor (14a-b) und mit mindestens einer Beleuchtungseinheit (100), wobei die Beleuchtungseinheit (100) eine Lichtquelle (104) zum Aussenden eines Lichtstrahls (110) und ein in dem Lichtstrahl (110) angeordnetes optisches Mustererzeugungselement (108, 118) zur Erzeugung eines Beleuchtungsmusters (20) in einem Überwachungsbereich (12) der 3D-Kamera (10) aufweist,
**dadurch gekennzeichnet,**
**dass** das Mustererzeugungselement (108, 118) ein Facettenspiegel (118) oder eine Facettenlinse (108) mit einer Vielzahl von Facetten (116) ist, um den Lichtstrahl (110) in eine Vielzahl von Einzellichtstrahlen (112) aufzuteilen, so dass jeder Einzellichtstrahl (112) ein Musterelement (114) des Beleuchtungsmusters (20) erzeugt, und dass die Facetten (116) untereinander unterschiedliche Größen und/oder Formen aufweisen und/oder untereinander um unterschiedliche Winkel verkippt sind.

2. 3D-Kamera (10) nach Anspruch 1,
wobei das Beleuchtungsmuster (20) ein Punktmuster ist, dessen Punkte (114) von jeweils einem Einzellichtstrahl (112) erzeugt sind.

3. 3D-Kamera (10) nach Anspruch 1 oder 2,
wobei das Mustererzeugungselement (108, 118) als Ganzes die Gestalt einer Streulinse oder eines Wölbspiegels aufweist.

4. 3D-Kamera (10) nach einem der vorhergehenden Ansprüche,
wobei die Facetten (116) in einem äußeren Bereich des Mustererzeugungselements (108, 118) eine größere Fläche aufweisen als in einem inneren Bereich des Mustererzeugungselements (108, 118).

5. 3D-Kamera (10) nach einem der vorhergehenden Ansprüche,
wobei die Beleuchtungseinheit (100) ein Abbildungsobjektiv (120) aufweist, um das Beleuchtungsmuster (20) aus dem Nahfeld hinter dem Mustererzeugungselement in den Überwachungsbereich (12) abzubilden.

6. 3D-Kamera (10) nach einem der vorhergehenden Ansprüche,
wobei das Mustererzeugungselement (110, 118) verschieblich oder drehbar gelagert ist, um unterschiedliche Facetten in den Lichtstrahl (110) zu bewegen.

7. 3D-Kamera (10) nach einem der vorhergehenden Ansprüche,
wobei die Lichtquelle (104) mindestens einen Laser aufweist, und wobei insbesondere zwischen dem Laser und dem Mustererzeugungselement (108, 118) eine Sammeloptik (106) vorgesehen ist, um das Laserlicht auf das Mustererzeugungselement (108, 118) zu bündeln.

8. 3D-Kamera (10) nach einem der vorhergehenden Ansprüche,
die eine Vielzahl von Beleuchtungseinheiten (100a-d) zur Ausleuchtung eines größeren Überwachungsbereichs (12) oder zur Erzeugung einer größeren Beleuchtungsintensität aufweist, wobei die Beleuchtungseinheiten (100a-d) derart angeordnet sind, dass sich die Beleuchtungsbereiche (20a-d) der einzelnen Beleuchtungseinheiten (100a-d) überlappend oder nichtüberlappend addieren.

9. 3D-Kamera (10) nach einem der vorhergehenden Ansprüche,
die als Stereokamera ausgebildet ist und eine Auswertungseinheit (22) aufweist, welche für die Anwendung eines Stereoalgorithmus ausgebildet ist, in dem zur Erzeugung eines dreidimensionalen Entfernungsbildes einander zugehörige Teilbereiche der von den beiden Kameras (14a-b, 16a-b) der Stereokamera aufgenommenen Bilder des von dem Beleuchtungsmuster (20) ausgeleuchteten Überwachungsbereichs (12) erkannt und deren Entfernung anhand der Disparität berechnet wird.

10. 3D-Kamera (10) nach einem der vorhergehenden Ansprüche,
die als Sicherheitskamera ausgebildet ist, wobei die Auswertungseinheit (22) unzulässige Eingriffe in den Überwachungsbereich (12) erkennen und daraufhin ein Abschaltsignal erzeugen kann, und wobei ein Sicherheitsausgang (26) vorgesehen ist, um darüber ein Abschaltsignal an eine überwachte Maschine auszugeben.

11. Verfahren zur dreidimensionalen Überwachung eines Überwachungsbereichs (12), bei dem eine Lichtquelle (104) einen Lichtstrahl (110) durch ein optisches Mustererzeugungselement (108, 118) aussendet und dadurch in dem Überwachungsbereich (12) ein Beleuchtungsmuster (20) erzeugt und wobei eine 3D-Kamera (10) Bilder des derart ausgeleuchteten Überwachungsbereichs (12) aufnimmt,
**dadurch gekennzeichnet,**
**dass** der Lichtstrahl (110) in dem als Facettenspiegel (118) oder Facettenlinse (108) ausgebildeten Mustererzeugungselement (108, 118) an einer Vielzahl von Facetten (116) gebrochen oder reflektiert und somit in eine Vielzahl von Einzellichtstrahlen (112) aufgeteilt wird, die jeweils ein insbesondere punktförmiges Musterelement (114) des Beleuchtungsmusters (20) erzeugen, und dass ein unregelmäßiges Beleuchtungsmuster entsteht, indem die Einzellichtstrahlen (112) an Facetten (116) untereinander unterschiedlicher Größen und/oder Formen unterschiedliche Musterelemente (114) oder an zueinander um unterschiedliche Winkel verkippten Facetten (116) zueinander unterschiedlich beabstandete Musterelemente (114) erzeugen.

12. Verfahren nach Anspruch 11,
wobei jeweils zwei Bilder des ausgeleuchteten Überwachungsbereichs (12) aus unterschiedlicher Perspektive aufgenommen und daraus mittels eines Stereoalgorithmus' ein dreidimensionales Entfernungsbild berechnet wird, indem einander zugehörige Teilbereiche der beiden Bilder erkannt und deren Entfernung anhand der Disparität berechnet wird, wobei insbesondere in dem Entfernungsbild unzulässige Eingriffe in den Überwachungsbereich (12) erkannt und daraufhin ein Abschaltsignal an eine überwachte gefährliche Maschine ausgegeben wird.

## Claims

1. A 3D-camera (10) with at least one image sensor (14a-b) and at least one illumination unit (100), wherein the illumination unit (100) comprises a light source (104) for transmitting a light beam (110) and an optical pattern generating element (108, 118) arranged in the light beam (110) for generating an illumination pattern (20) in a monitoring area (12) of the 3D-camera (10),
**characterized in that**
the pattern generating element (108, 118) is a facet mirror (118) or a facet lens (108) with a plurality of facets (116) to divide the light beam (110) into a plurality of individual light beams (112) so that each individual light beam (112) generates a pattern element (114) of the illumination pattern (20), and **in that** the facets (116) have mutually different sizes and/or shapes and/or are mutually tilted to different angles.

2. The 3D-camera (10) according to claim 1,
wherein the illumination pattern (20) is a dot pattern whose dots (114) each are generated by an individual light beam (112).

3. The 3D-camera (10) according to claim 1 or 2,
wherein the pattern generating element (108, 118) as a whole has the shape of a diverging lens or a diverging mirror.

4. The 3D-camera (10) according to any of the preceding claims,
wherein the facets (116) in an outer region of the pattern generating element (108, 118) have a greater area than in an inner region of the pattern generating element (108, 118).

5. The 3D-camera (10) according to any of the preceding claims,
wherein the illumination unit (100) has an imaging objective (120) to image the illumination pattern (20) from the near field downstream of the pattern generating element into the monitoring area (12).

6. The 3D-camera (10) according to any of the preceding claims,
wherein the pattern generating element (110, 118) is mounted movably or rotatably to move different facets into the light beam (110).

7. The 3D-camera (10) according to any of the preceding claims,
wherein the light source (104) comprises at least one laser, and wherein in particular focusing optics (106) are arranged between the laser and the pattern generating element (108, 118) to focus the laser light onto the pattern generating element (108, 118).

8. The 3D-camera (10) according to any of the preceding claims,
having a plurality of illumination units (100a-d) for illuminating a larger monitoring area (12) or for generating a larger illumination intensity, wherein the illumination units (100a-d) are arranged so that the illumination areas (20a-d) of the individual illumination units (100a-d) add in an overlapping or non-overlapping way.

9. The 3D-camera (10) according to any of the preceding claims,
which is made as a stereo camera and comprises an evaluation unit (22) which is configured for the application of a stereo algorithm, in which partial areas corresponding to one another are detected in images of the monitored area (12) illuminated by the illumination pattern (20) captured by the two cameras (14a-b, 16a-b) of the stereo camera, and their distance is calculated from the disparity.

10. The 3D-camera (10) according to any of the preceding claims,
which is made as a safety camera, wherein the evaluation unit (22) is configured to detect forbidden intrusions into the monitored area (12) and to then generate a shutdown signal, and wherein a safety output (26) is provided to output a shutdown signal to a monitored machine.

11. A method for the three-dimensional monitoring of a monitored area (12), wherein a light source (104) transmits a light beam (110) through an optical pattern generating element (108, 118) and thus generates an illumination pattern (20) in the monitored area (12), and wherein a 3D-camera (10) takes images of the illuminated monitored area (12),
**characterized in that**
the light beam (110) is refracted or reflected at the pattern generating element (108, 118) made as a facet mirror (118) or facet lens (108) at a plurality of facets (116) and thus divided into a plurality of individual light beams (112) which generate a pattern element (114) of the illumination pattern (20) each, in particular a dot shaped pattern element (114), and **in that** an irregular illumination pattern is obtained by the individual light beams (112) generating different pattern elements (114) at facets (116) of mutually different sizes and/or shapes or generating mutually differently offset pattern elements (114) at facets (116) being mutually tilted to different angles.

12. The method of claim 11,
wherein two respective images of the illuminated monitored area (12) are captured from different perspectives, and a three-dimensional distance image is calculated from that with a stereo algorithm in that partial areas of the two images corresponding to one another are detected and their distance is calculated from the disparity, wherein in particular forbidden intrusions into the monitored area (12) are detected, and then a shutdown signal is output to a monitored dangerous machine.

## Revendications

1. 3D-caméra (10) avec au moins un capteur d'image (14a-b) et au moins une unité d'éclairage (100), et l'unité d'éclairage (100) comprend une source de lumière (104) pour transmettre un faisceau de lumière (110) et un élément qui génère un dessin optique (108, 118) qui est disposé dans le faisceau de lumière (110) pour générer une configuration d'éclairage (20) dans une zone de surveillance (12) de la 3D-caméra (10),
**caractérisée en ce que**
l'élément qui génère un dessin optique (108, 118) est un miroir des facettes (118) ou une lentille des facettes (108) avec une pluralité des facettes (116) pour diviser le faisceau lumineux (110) en une pluralité des faisceaux lumineux individuels (112) de manière que chaque faisceau de lumière individuel (112) génère un élément de dessin (114) de la configuration d'éclairage (20), et **en ce que** les facettes (116) ont des tailles et/ou des formes mutuellement différentes et/ou sont mutuellement inclinées dans des angles différents.

2. 3D-caméra (10) selon la revendication 1, **caractérisée en ce que** la configuration d'éclairage (20) est une configuration de points dont les points (114) sont générés chacun par un faisceau de lumière individuel (112).

3. 3D-caméra (10) selon la revendication 1 ou 2, **caractérisée en ce que** l'élément qui génère un dessin optique (108, 118) en totale comprend la forme d'une lentille divergente ou d'un miroir divergent.

4. 3D-caméra (10) selon l'une des revendications précédentes,
**caractérisée en ce que** les facettes (116) dans une région extérieure de l'élément qui génère un dessin optique (108, 118) ont une surface plus grande que dans une région intérieure de l'élément qui génère un dessin optique (108, 118).

5. 3D-caméra (10) selon l'une des revendications précédentes,
**caractérisée en ce que** l'unité d'éclairage (100) comprend un objectif d'image (120) pour imager la configuration d'éclairage (20) du champ proche derrière l'élément qui génère un dessin optique (108, 118) dans la zone de surveillance (12).

6. 3D-caméra (10) selon l'une des revendications précédentes,
**caractérisée en ce que** l'élément qui génère un dessin optique (108, 118) est monté de façon mobile ou rotatif pour déplacer les différentes facettes dans le faisceau de lumière (110).

7. 3D-caméra (10) selon l'une des revendications précédentes,
**caractérisée en ce que** la source de lumière (104) comprend au moins un laser, et **en ce que** notamment une optique de focalisation (106) est disposée entre le laser et l'élément qui génère un dessin optique (108, 118) pour focaliser la lumière de laser sur l'élément qui génère un dessin optique (108, 118).

8. 3D-caméra (10) selon l'une des revendications précédentes,
qui comporte une pluralité d'unités d'éclairages (100a-d) pour éclairer une zone de surveillance plus large ou pour générer une intensité d'éclairage plus grande, dans laquelle les unités d'éclairages (100a-d) sont disposées de telle sorte que les zones d'éclairages (20a-d) des unités d'éclairages individuels (100a-d) s'ajoutent d'une manière chevauchement ou non-chevauchement.

9. 3D-caméra (10) selon l'une des revendications précédentes,
qui est réalisée comme une caméra stéréo et qui comprend une unité d'évaluation (22) qui est configurée pour l'application d'un algorithme de stéréo, dans lequel les zones partielles correspondantes l'une à l'autre sont détectées dans des images de la zone surveillée (12) illuminée par la configuration d'éclairage (20) capturée par les deux caméras (14a-b, 16a-b) de la caméra stéréo, et leur distance est calculée par la disparité.

10. 3D-caméra (10) selon l'une des revendications précédentes,
qui est réalisée comme une caméra de sécurité, **caractérisée en ce que** l'unité d'évaluation (22) identifie des intrusion interdites dans la zone surveillée (12) et ensuite génère un signal d'arrêt, et **en ce qu'**une sortie de sécurité (26) est prévue pour donner un signal d'arrêt à une machine surveillée.

11. Procédé pour la surveillance tridimensionnelle d'une zone de surveillance (12), dans lequel une source de lumière (104) transmet un faisceau de lumière (110) à travers d'un élément qui génère un dessin optique (108, 118) et génère ainsi une configuration d'éclairage (20) dans la zone surveillée (12), et en ce qu'une 3D-caméra (10) prend des images de la zone éclairée surveillée (12), **caractérisé en ce que**
le faisceau lumineux (110) est réfracté ou réfléchi à une pluralité des facettes (116) d'un élément qui génère un dessin optique (108, 118) en forme d'une miroir à facettes (118) ou d'une lentille à facettes (108) et ainsi est divisé en une pluralité des faisceaux lumineux individuels (112) qui génère chacune un élément de dessin (114) de la configuration d'éclairage (20), notamment en forme de point motif (114), et **en ce qu'**une zone d'éclairages irrégulière est obtenue par les faisceaux lumineux individuels (112) qui génèrent des éléments de dessin (114) avec des distances différentes par des facettes (116) de tailles mutuellement différentes et/ou des formes différentes ou par des facettes (116) mutuellement inclinées à des angles différents.

12. Procédé selon la revendication 11,
**caractérisé en ce que** deux images respectives de la zone éclairée surveillée (12) sont fabriqués à partir des perspectives différentes, et à partir de cela une image tridimensionnelle de distance est calculée avec un algorithme de stéréo en détectant des zones partielles des deux images qui correspondent l'un à l'autre et leur distance est calculée par la disparité, et **en ce qu'**en particulier dans l'image de distance des intrusions interdites dans la zone surveillée (12) sont détectées, et ensuite un signal d'arrêt est émis à une machine dangereuse surveillée.
